# EUROPEAN PATENT SPECIFICATION

(11) **EP 2 500 247 B1**
(45) Date of publication and mention of the grant of the patent: **09.08.2017**
(21) Application number: 12159395.8
(22) Date of filing: 14.03.2012
(51) Int. Cl.: B62J 9/00

(54) **Saddlebag attachment structure for saddle riding type vehicle**
Satteltaschenbefestigung für ein Fahrzeug mit Sattel
Structure de fixation d'une sacoche pour véhicule avec selle

(30) Priority: 18.03.2011 JP 2011061712
(43) Date of publication of application: 19.09.2012
(73) Proprietor: Honda Motor Co., Ltd., Tokyo 107-8556 (JP)
(72) Inventor: Takemura, Hiroo, Wako-shi, Saitama 351-0193 (JP); Kishi, Hiroshi, Wako-shi, Saitama 351-0193 (JP)
(74) Representative: Stevens, Jason Paul

(56) References cited:
- JP-A- 2010 047 164
- US-A1- 2005 150 921
- US-B1- 6 293 450

## Description

This invention relates to a saddlebag attachment structure for a saddle riding type vehicle, and more particularly to a saddlebag attachment structure in which a latch member is provided to a vehicle body and is engaged with a saddlebag to position the saddlebag in a lateral direction of the vehicle

In the prior art, there has been proposed a saddlebag attachment structure for a motorcycle including: a rear frame in a rear portion of a vehicle body; a rear fender provided under the rear frame and covering a rear wheel; an occupant seat provided above the rear fender for an occupant to sit on; and saddlebags each serving as a storage unit attached to the rear fender (see Japanese Patent Application Publication No. 2010-47164, for example). In this saddlebag attachment structure, a side surface of each of the saddlebags which faces the vehicle body frame is provided with an engagement recess portion to be engaged with a latch arm attached to the vehicle body frame side and extending from a passenger step holder. In this attachment structure, the saddlebag can be positioned in a lateral direction by engagement of the latch arm with the saddlebag.

In addition, there has also been proposed a side trunk attachment structure for a motorcycle including: a frame member in a rear portion of a vehicle body; a side trunk; a trunk supporting portion provided to the frame member; and side trunk side latch means provided to the side trunk and configured to be engaged with the trunk support portion (see Japanese Patent Application Publication No. 2007-55283, for example). In this side trunk attachment structure, a muffler supporting bracket is supported by a rear frame and is attached near a rear end portion of a back stay in such a manner as to extend downward to the rear. In addition, an intermediate portion of this muffler supporting bracket in a length direction is provided with lower engagement means for restricting movement of the side trunk in a lateral direction. The lower engagement means is formed of: an engagement piece that is a part of the muffler supporting bracket formed to partially protrude rearward; and a buffer rubber piece fixedly attached to an end portion of the engagement piece on a rear side of the vehicle body. The buffer rubber piece covers the engagement piece from vertical (up-down) and lateral (left-right) directions as well as from the rear, and is formed into a shape engageably insertable between paired left and right guide walls provided to an end portion of the side trunk on a front side of the vehicle body. In this attachment structure, movement of the side trunk in the lateral direction can be restricted by the lower engagement means.

In the attachment structure described in Japanese Patent Application Publication No. 2010-47164, the latch arm is provided to extend from the passenger step holder. Accordingly, if the holder is displaced by elastic deformation, as a result of the application of load on the step, the latch arm in engagement with the saddlebag is also displaced. Thus, the holder is required to have rigidity sufficient to bear the load applied by the passenger.

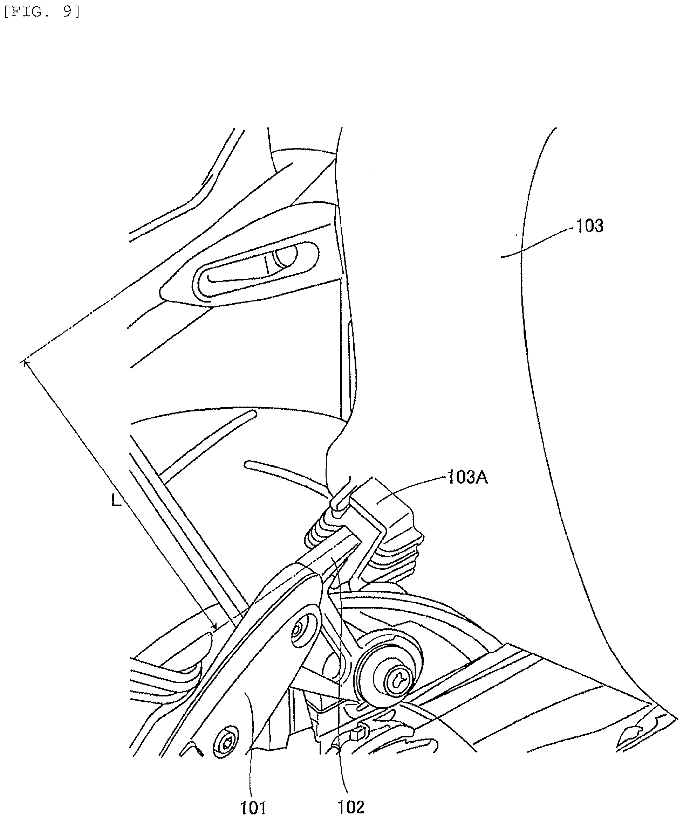

An example of the prior art saddlebag attachment structure is shown in Fig. 9, which shows that a passenger step holder 101 is attached to a side surface of a vehicle body while a latch arm 102 is integrally provided with the holder 101, and a leading end of the latch arm 102 is locked in an engagement portion 103A of a saddlebag 103. When the latch arm 102 is provided to extend from the holder 101 as described above, a distance L between the attachment position of the holder 101 to the vehicle body and the leading end of the latch arm 102 is long. Thus, the attachment position of the saddlebag is easily affected by displacement of the leading end of the latch arm 102.

Furthermore, in the attachment structure described in Japanese Patent Application Publication No. 2007-55283, the lower latch means is integrally provided with the muffler supporting bracket. Thus, the bracket is required to have rigidity high enough to support the side trunk, which is heavier than the muffler. In addition, there is a problem that upon vibration of the muffler, the vibration is transmitted to the side trunk through the lower latch means.

The step holder by itself does not require high rigidity if the step holder is free from permanent deformation and interference with another component. However, it is desired to secure the maximum capacity for the saddlebag within such a range that the saddlebag may not interfere with a suspension part, a wheel, and the like located on an inner side. Thus, the saddlebag attachment structure is required to have higher rigidity than the step holder in some cases.

Moreover, when the saddlebag is not used, the latch arm is entirely exposed to the outside in Japanese Patent Application Publication No. 2010-47164, and the lower latch means is exposed to the outside in Japanese Patent Application Publication No. 2007-55283. Thus, both of the known attachment structures have exterior design appearances which are degraded in this state (with saddlebags removed), in comparison with the state where the saddlebag is used.

A further form of saddlebag attachment structure is disclosed in US 2005/0150921, on which the preamble of claim 1 is based. This document discloses a saddlebag mounting system for a motorcycle, comprising: a saddlebag mount provided at a rear of the motorcycle frame; a rear foot peg attached to a side surface of the motorcycle frame; a saddlebag having a hook to be latched into the saddlebag mount; and a yoke bracket whose front end is attached to the motorcycle frame, whose rear end can be engaged with a yoke attached to the saddlebag and which is a unit separate from the rear foot peg, wherein the yoke bracket is attached to part of the frame to which the rear foot peg is attached, by using the attachment means by which the rear foot peg is attached, and the yoke bracket is provided to extend from the motorcycle frame to the rear side.

The yoke bracket is attached to the motorcycle frame by the foot peg. It appears that in order to attach the yoke bracket, it would be necessary for the yoke bracket to be held in place on the frame while the foot peg is attached, which is inconvenient

Thus, the present invention has been made in view of the aforementioned problems and aims, at least in its preferred embodiments, to provide a saddlebag attachment structure for a saddle riding type vehicle having an occupant step, the attachment structure being capable of securing saddlebag attachment rigidity.

According to a preferred aspect of the present invention, there is provided a saddlebag attachment structure for a saddle riding type vehicle, comprising: a vehicle body; a bag supporting portion provided at a vehicle body rear portion; an occupant step attached to a side surface of the vehicle body rear portion with attachment means; a saddlebag having saddlebag side latch means to be latched into the bag supporting portion; and a latch member whose front side is attached to the vehicle body rear portion, whose rear side can be engaged with the saddlebag and which is a unit separate from the occupant step, wherein the latch member is attached to a vehicle body attachment portion where the occupant step is to be attached, by using the attachment means to which the occupant step is attached, and the latch member is provided to extend from the vehicle body attachment portion to the rear side; characterized in that the attachment means includes screw members; the occupant step and the latch member respectively include a step side insertion hole and a latch member side insertion hole through both of which a screw member is inserted, and the occupant step and the latch member are attached to the vehicle body attachment portion by inserting the screw member through the step side insertion hole and the latch member side insertion hole; and the latch member includes a latch member side attachment portion attached to the vehicle body attachment portion, the occupant step includes a step side attachment portion attached to the vehicle body attachment portion, the latch member side attachment portion has an upper surface portion and inner and outer side surface portions, and the latch member side attachment portion is fitted onto outer sides of the step side attachment portion; and the screw member is inserted through a latch member side insertion hole in the outer side surface portion, the step side insertion hole of the step side attachment portion of the occupant step, and a latch member side insertion hole in the inner side surface portion, and is then screwed into a nut.

With this arrangement, direct attachment of the latch member to the vehicle body attachment portion reduces the influence of a load applied to the occupant step, and thus makes it possible to stably position the saddlebag by using the latch member. Moreover, the occupant step and the latch member can be attached to the vehicle body attachment portion by the common attachment means.

Further, when the saddlebag is not used, the occupant step can be attached alone with the screw member removed. Thus, it is possible to have good exterior design appearance and also to achieve reduction in weight by removing the latch member.

In addition, the occupant step and the latch member can be attached to the vehicle body attachment portion by inserting the screw member through the step side insertion hole and the latch member side insertion hole, or the occupant step alone can be attached to the vehicle body attachment portion by inserting the screw member through the step side insertion hole. When the occupant step and the latch member are both to be attached to the vehicle body attachment portion, the latch member can be fitted to the occupant step prior to attachment, making assembly more convenient.

Further, the rigidity against the load applied to the latch member in the lateral direction of the vehicle is high, and the width dimension of the latch member side attachment portion and the step side attachment portion in attachment can be made extremely small.

Preferably, the attachment means is provided in front and rear positions of the vehicle body attachment portion, and the latch member is provided to extend substantially along a virtual line connecting the front and rear positions of the attachment means.

With this arrangement, the rigidity of the attachment structure of the saddlebag to the vehicle body can be secured.

The invention also extends to a saddle riding type vehicle equipped with a saddlebag attachment structure as recited above.

A preferred embodiment of the invention will now be described by way of example only and with reference to the accompanying drawings, in which:
Fig. 1 is a side view of a first embodiment of a saddlebag attachment structure for a saddle riding type vehicle according to the present invention;
Fig. 2 is a perspective view of a region around an occupant step and a latch member of the same;
Fig. 3 is a plan view of the same;
Fig. 4 is a plan view of the latch member, partially in cross-section;
Fig. 5 is a side view of the latch member;
Figs. 6 are cross-sectional views showing an attachment state of the latch member and the occupant step to a vehicle body attachment portion, with Fig. 6A showing a rear side and Fig. 6B showing a front side;
Fig. 7 is a partially cross-sectional front view for describing the attachment method of the saddlebag;
Fig. 8 is a partially cross-sectional front view of the saddlebag attachment structure; and
Fig. 9 is a perspective view of a prior art structure showing an engagement state of a latch arm and a saddlebag.

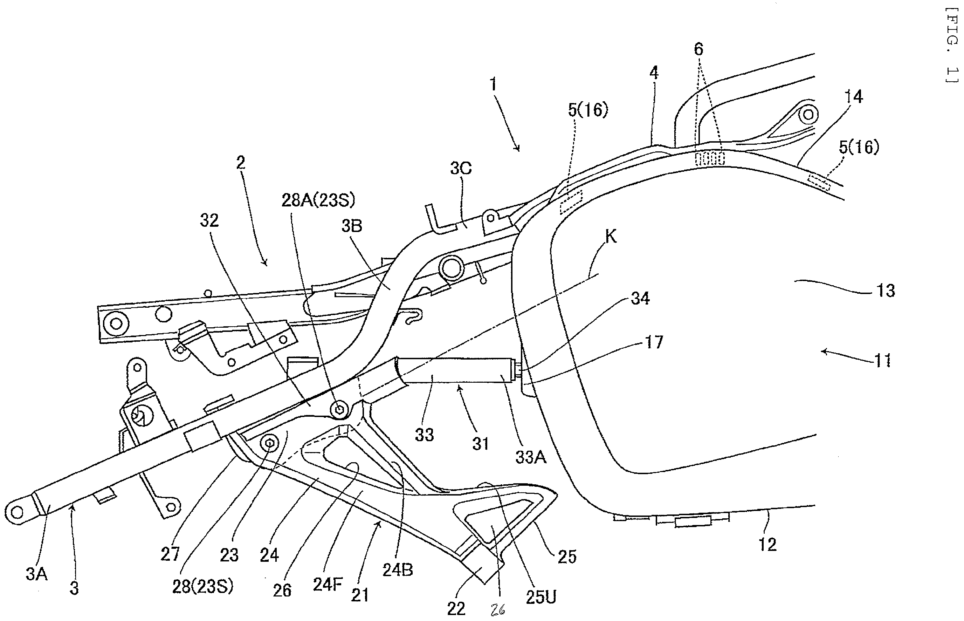

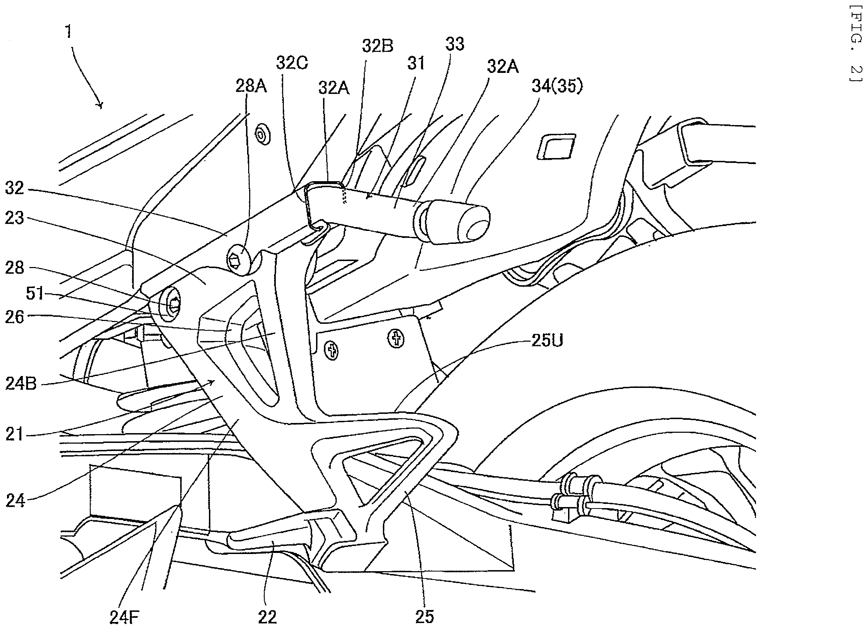

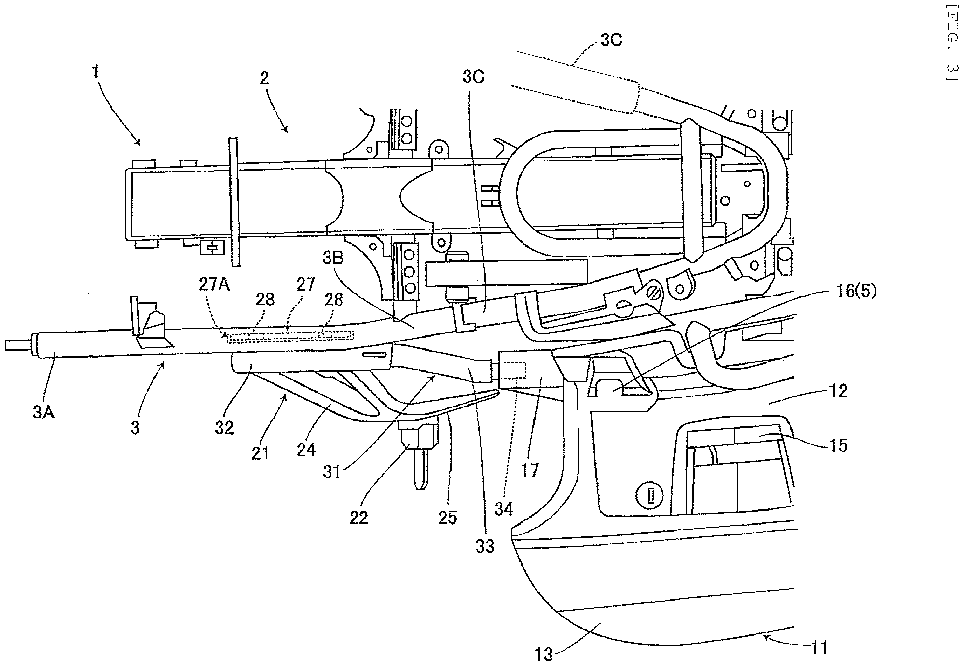

As shown in Fig. 1 to Fig. 8, a rear frame 2 is provided at a rear portion of a vehicle body 1 of a saddle riding type vehicle, and seat rails 3, which support an occupant seat (not shown), are provided on the rear frame 2. The seat rails 3 are symmetrical and are substantially U-shaped in plan view. The front ends of the seat rails 3 are connected to a main frame of the vehicle body. In addition, the seat rails 3 are inclined upward in a direction from the front side to the rear side. Each of the seat rails 3 has a longitudinal centre portion 3B, which has an inclination angle larger than a front portion 3A and a rear portion 3C. The rear portion 3C of the seat rail 3 is set to have an inclination angle slightly smaller than the front portion 3A.

A saddlebag attachment portion 4 is provided on a side portion of the rear frame 2 and is supported by the rear frame 2. Saddlebag attachment holes 5, 5, which are saddlebag supporting portions, are provided on the saddlebag attachment portion 4 at the front and rear thereof, with an interval therebetween. Rib portions 6 are provided between the saddlebag attachment holes 5, 5 and are formed to protrude downward.

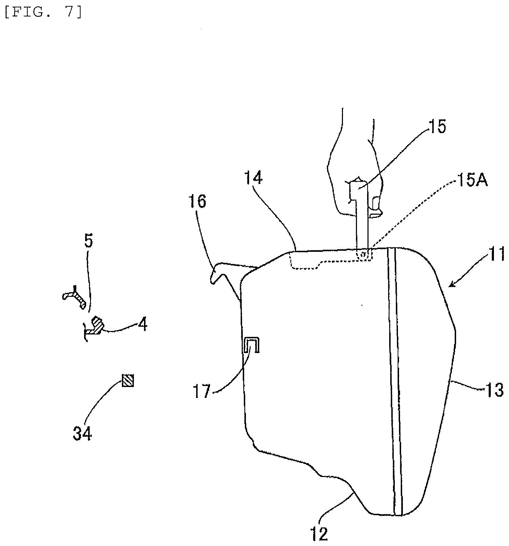

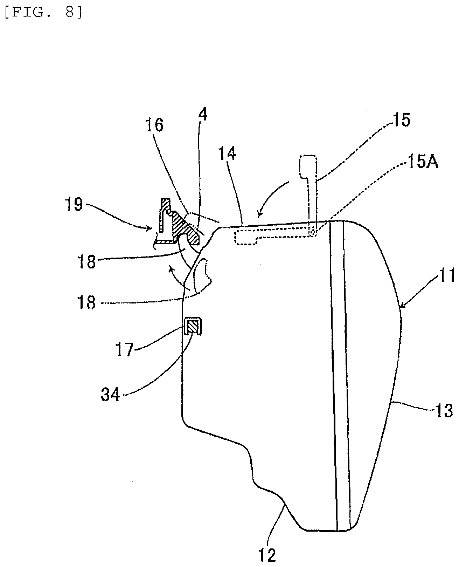

As shown in Fig. 7 and Fig. 8, a saddlebag 11 includes: a case main body 12 in which items may be stored; a cover portion 13, which covers an outward area of the case main body 12; a handle member 15, which is pivotably provided at an upper surface 14 of the case main body 12 and is used in attachment or detachment of and transportation of the saddlebag 11; a claw portion 16 provided at an upper portion of a side surface of the case main body 12, which serves as saddlebag side latch means and engages with the saddlebag attachment hole 5; and an engagement portion 17 provided at a substantially centre portion of the side surface on the vehicle body side, which engages with a leading end of a latch member to be described later.

A front side and a lower portion of the engagement portion 17 are open. The claw portion 16 extends towards the laterally inner part of the vehicle body and is bent downward. The claw portion 16 is hooked into the saddlebag attachment hole 5, and thereby, the saddlebag 11 is supported by the vehicle body rear portion 1. Note that, although saddlebags are attached to the left and right of the vehicle body rear portion 1, only the attachment structure of the saddlebag 11 on one side of the vehicle will be described, because the configuration is common to the left and right sides.

A lower side engagement arm portion 18, which can engage with the rib portion 6, is provided at the upper portion of the side surface of the case main body 12 in addition to the claw portion 16 described above. Here, the rib portion 6 extends downward from the saddlebag attachment portion 4, and the case main body 12 forms the saddlebag 11. The lower side engagement arm portion 18 is a member that moves in conjunction with movement of the handle member 15. A transmission drive mechanism (not shown) that transmits movement of the handle member 15 to the lower side engagement arm portion 18 is provided in the saddlebag 11.

As described, the saddlebag 11 includes the lower side engagement arm portion 18, which is provided under the claw portion 16 and extends upward to the laterally inner side of the vehicle body. The lower side engagement arm portion 18 and the claw portion 16 hold the saddlebag attachment portion 4 therebetween in cooperation with each other. Thus, the lower side engagement arm portion 18 and the claw portion 16 form holding means 19.

Returning to Figure 1, a pillion step holder 21 is provided on each of the seat rails 3 in front of the saddlebag 11. A pillion step 22, which is an occupant step, is foldably provided to the pillion step holder 21. Here, the description is given on the basis of using a passenger step as an occupant step; however, the occupant step may instead be a driver step.

The pillion step holder 21 includes: a fastening portion 23, which is a step side attachment portion attached to the seat rail 3; a leg portion 24, which extends downward toward the rear from the fastening portion 23; and a rear arm portion 25, which extends from a rear end of the leg portion 24 towards a rear portion of the seat rail 3. The leg portion 24 includes a front side leg portion 24F and a rear side leg portion 24B, and the fastening portion 23 connects between the upper ends of the front side leg portion 24F and the rear side leg portion 24B. A window portion 26, which is an opening portion, is formed in the area surrounded by the front side leg portion 24F, the rear side leg portion 24B and the fastening portion 23. The pillion step 22 is provided at the lower end of the leg portion 24 and protrudes outward. In addition, the rear side arm portion 25 is formed in a substantially triangular shape having a window portion 26, which is an opening portion, in its centre portion. An upper edge portion 25U of the rear side arm portion 25 is formed so as to be almost horizontal.

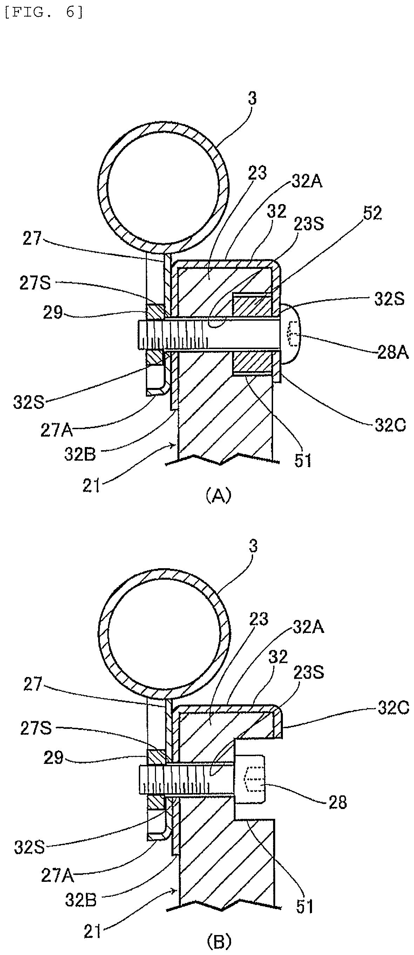

In addition, as shown in Fig. 1 and Figs. 6, an attachment plate 27, which is a vehicle body attachment portion, is fixedly attached to a lower portion of the front portion 3A of the seat rail 3 on the rear side and secures rigidity by including a frame portion 27A in its front and rear lower portions. The fastening portion 23 is detachably attached to the attachment plate 27 by attachment bolts 28, 28A. The attachment bolts 28, 28A are screw members that are attachment means for attaching a passenger step to a side surface of the vehicle body rear portion 1. In this case, nuts 29 into which the attachment bolts 28, 28A are respectively screwed are provided at an inner surface of the attachment plate 27, and through holes 27S, which correspond to the nuts 29, and through which the attachment bolts 28, 28A are respectively inserted, are formed in the attachment plate 27. As shown in Fig. 6, step side insertion holes 23S through which the attachment bolts 28, 28A are respectively inserted are formed at front and rear positions in the fastening portion 23. Here, the fastening portion 23 has a substantially square shape in cross section. A hexagon socket head cap bolt is used as the attachment bolt 28, and the head portion of the attachment bolt 28 has a cylindrical shape and the head portion of the attachment bolt 28A has a saucer shape. In addition, the fastening portion 23 may have a hollow portion.

A latch arm 31, which is a latch member, is attached to the attachment plate 27 together with the pillion step 22. The front side of the latch arm 31 is latched into the saddlebag 11 to laterally position the saddlebag 11.

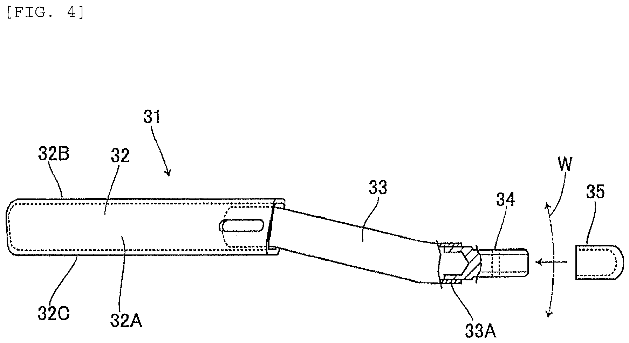

The latch arm is shown in Fig. 4 to Figs. 6, and is made of steel or the like. The latch arm includes in its front side an arm side fastening portion 32 of a substantially right square bracket shape, which has an upper surface portion 32A, and inner and outer side surface portions 32B, 32C. This arm side fastening portion 32 is a latch member side attachment portion, and is fitted onto outer sides of the fastening portion 23. Latch member side insertion holes 32S, 32S, corresponding to the step side insertion holes 23S, 23S in the front and rear positions, are formed in front and rear positions in the inner side surface portion 32B on the vehicle body side, while a latch member side insertion hole 32S corresponding to the step side insertion hole 23S in the rear position is formed in the outer side surface portion 32C on the outer side of the vehicle body. As shown in Fig. 1 and Fig. 6B, the front side of the outer side surface portion 32C is partially cut out upward and the insertion hole 32S in the front position of the outer side surface portion 32C is omitted.

Fig. 6A shows the rear side of the arm side fastening portion 32 fitted onto the outer sides of the fastening portion 23, and Fig. 6B shows the front side of the arm side fastening portion 32 fitted onto the outer sides of the fastening portion 23. A recessed portion 51, which corresponds to each bolt insertion hole 23S, is formed on the outer side of the fastening portion 23. In Fig. 6B, the head portion of the attachment bolt 28 is housed in the recessed portion 51. In Fig. 6A, a tubular collar 52 is put in the recessed portion 51, and the outer side surface portion 32C comes in contact with the collar 52. The attachment bolt 28A is inserted through the latch member side insertion hole 32S of the outer side surface portion 32C, the collar 52, the bolt insertion hole 23S of the fastening portion 23 and the latch member side insertion hole 32S of the inner side surface portion 32B and is then screwed into the nut 29. As described, since the collar 52 is put in the recessed portion 51, fastening by the attachment bolt 28A can be securely performed.

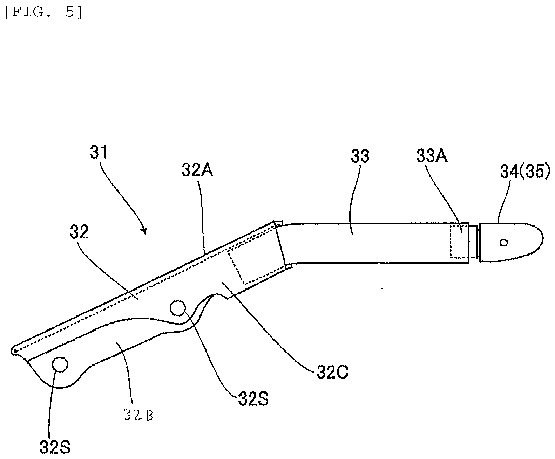

Moreover, as shown in the plan view of Fig. 4, even when a load W in the lateral direction is applied to the leading end side of the latch arm 31, the attachment strength of the arm side fastening portion 32 can be secured by fitting the arm side fastening portion 32 of the substantially right square bracket shape onto the fastening portion 23. In addition, as shown in Fig. 4 and Fig. 5, the arm side fastening portion 32 and an arm main body 33 are connected together by the front side of the arm main body 33 being inserted into the rear end of the arm side fastening portion 32. Accordingly, the connected portion forms an overlapping structure of the arm side fastening portion 32 and the arm main body 33. Thus, it is possible to secure the strength.

Furthermore, the latch arm 31 has the arm main body 33, and the front side of the arm main body 33 is fixedly attached to the rear end of the arm side fastening portion 32. As shown in Fig. 4 and Fig. 5 and the like, the arm side fastening portion 32 is obliquely installed in such a way that the rear side thereof becomes higher in the attachment state, and the front end of the arm main body 33 is bent such that the centre portion thereof is almost horizontal, and the arm main body 33 is formed slightly outward toward the rear side in plan view. Moreover, an engagement insertion portion 34 is provided on the rear side of the rear end portion 33A. The engagement insertion portion 34 protrudes almost horizontally and is inserted and engaged with the engagement portion 17 of the saddlebag 11. An elastic member 35 made of a rubber or the like is fitted onto the outer sides of the engagement insertion portion 34. Moreover, the rear end of the arm main body 33 is bent, so that the rear end portion 33A and the engagement insertion portion 34 are placed in parallel with the arm side fastening portion 32 in plan view. In addition, as shown in Fig. 1, the latch arm 31 is provided so as to extend substantially along a virtual line K, which connects the positions of the front and rear attachment bolts 23, 23.

Furthermore, in the vehicle including the saddlebag 11, the arm side fastening portion 32 is fitted onto the outer sides of the fastening portion 23 of the pillion step holder 21, and the attachment bolts 28 are respectively inserted through the step side insertion holes 23S, 23S and are fastened to the attachment plate 27. By fastening the attachment bolts 28, the pillion step holder 21 and the latch arm 31 are attached to the vehicle body rear portion 1 by using the common attachment bolt 28.

If saddlebags 11 are not to be used, only the fastening portion 23 of the pillion step holder 21 is fixed to the attachment plate 27 by the attachment bolts 28.

Next, the description of the attachment method of the saddlebag 11 is continued. As shown in Fig. 7, the claw portion 16 is hooked into the saddlebag attachment hole 5 and the engagement portion 17 is engaged with the engagement insertion portion 34 of the latch arm 31 while the handle member 15 is held. Next, as shown in Fig. 8, upon rotation of the handle member 15 around an axis 15A in a direction to lay the handle member 15 flat, the lower side engagement arm portion 18 housed in the upper portion of the side surface of the case main body 12 is moved by the transmission drive mechanism so as to protrude upward from the upper portion of the side surface of the case main body 12, and engages with the rib portion 6 of the saddlebag attachment portion 4. More specifically, the saddlebag 11 is attached to the vehicle body rear portion 1 while the saddlebag attachment portion 4 is held between the claw portion 16 and the lower side engagement arm portion 18. The claw portion 16 mainly supports the load of the saddlebag 11 and the engagement insertion portion 34 of the latch arm 31 mainly positions the saddlebag 11 in the lateral direction. The saddlebag 11 can be removed by performing an operation in reverse to the operation described above, and so description of the removal operation is omitted here.

As described above, a structure is obtained in which the engagement insertion portion 34 of the latch arm 31 is unlikely to be displaced and the latch arm 31 is not directly affected by load, even when the saddlebag 11 is attached to the vehicle body rear portion 11 and the load is applied to the pillion step holder 21 by a passenger using the pillion step 22.

Moreover, in the prior art, when the latch arm is provided to extend from the holder, the engagement position of the latch arm and the saddlebag becomes distant from the attachment position of the holder to the vehicle body. Thus, there is a concern that the attachment position of the saddlebag is affected when the engagement position of the latch arm is displaced due to the rigidity of the vehicle body side frame and the holder. Here, however, the latch arm 31 is provided to extend substantially straight to the rear side. Thus, the interval between the attachment plate 27, which is the vehicle body attachment member, and the engagement insertion portion 34 is short, and thus, an occurrence of moment in the arm side fastening portion 32 due to external load is small as compared with the prior art. Thus, the saddlebag 11 is securely positioned in the lateral direction by the latch arm 31, and the influence on the attachment position of the saddlebag 11 is reduced.

As described, the latch arm 31 configured to position the saddlebag 11 in the lateral direction is attached to the seat rail 3 side together with the pillion step holder 21 by fastening the common attachment bolts 28, 28. In addition, the latch arm 31 extends substantially along the direction connecting the front and rear attachment bolts 28, 28 used to fasten both of the latch arm 31 and the pillion step holder 21. Thus, the rigidity of the attachment structure of the saddlebag 11 can be secured without being affected by the rigidity of the seat rail 3 and the rigidity of the pillion step holder 21.

In one embodiment, the saddlebag attachment structure includes: the saddlebag attachment holes 5, which are the bag supporting portions provided at the rear portion of the vehicle body; the pillion step 22, which is a passenger step attached to the side surface of the rear portion of the vehicle body by the attachment bolts 28, which are the attachment means; the saddlebag 11, which has the claw portion 16, which is the saddlebag side latch means latched into the saddlebag attachment hole 5; and the latch arm 31, which is a latch member whose front end is attached to the side surface of the vehicle body rear portion 1, whose rear end is engaged with the saddlebag 11 and which is a unit separate from the pillion step 22. Here, the latch arm 31 is attached to the attachment plate 27 by the attachment bolts 28. The attachment plate 27 is the vehicle body attachment member where the pillion step 22 is attached, and the latch arm 31 is provided to extend from the attachment plate 27 to the rear side. Thus, the influence of the load applied to the pillion step 22 is reduced by directly attaching the latch arm 31 to the attachment plate 27, and it is thus possible to stably position the saddlebag 11 by the latch arm 31. Moreover, the pillion step 22 and the latch arm 31 can be attached to the attachment plate 27 by using the common attachment bolts 28.

Furthermore, in this embodiment, the attachment bolts 28, which are attachment means, are inserted through the front and rear positions of the attachment plate 27, which is the vehicle body attachment portion. The latch arm 31 is provided to extend substantially along the virtual line K connecting the front and rear positions of the attachment plate 27. Thus, the rigidity of the attachment structure of the saddlebag 11 to the vehicle body rear portion 1 can be secured.

Furthermore, in this embodiment, the attachment means includes the attachment bolts 28. Thus, when the saddlebag 11 is not used, the attachment bolts 28 are removed, and then, the pillion step 22 can be attached alone. Thus, it is possible to have good exterior design appearance and also to achieve reduction in weight.

Furthermore, in this embodiment, the pillion step 22, which is an occupant step, includes the step side insertion holes 23S, and the latch arm 31, which is the latch member, includes the latch member side insertion holes 32S. The pillion step 22 and the latch arm 31 are attached to the attachment plate 27 by inserting the attachment bolts 28 through the step side insertion holes 23S and the latch member side insertion holes 32S. Thus, the pillion step 22 and the latch arm 31 can be attached to the attachment plate 27 by inserting the attachment bolts 28 through the step side insertion holes 23S and the latch member side insertion holes 32S, or the pillion step 22 alone can be attached to the attachment plate 27 by inserting the attachment bolts 28 through the step side insertion holes 23S.

Moreover, in this embodiment, the latch arm 31, which is the latch member, includes the arm side fastening portion 32. The arm side fastening portion 32 is the latch member side attachment portion attached to the attachment plate 27, which is the vehicle body attachment portion. In addition, the pillion step 22, which is the occupant step, includes the fastening portion 23. The fastening portion 23 is the step side attachment portion attached to the attachment plate 27. The arm side fastening portion 32 has the upper surface portion 32A and the inner and outer side surface portions 32B, 32C. The arm side fastening portion 32 is fitted onto the outer sides of the fastening portion 23. Thus, the rigidity against the load applied to the latch arm 31 in the lateral direction is high, and the width of the arm side fastening portion 32 and the fastening portion 23 in attachment can be extremely small.

Moreover, the latch arm 31 has the arm side fastening portion 32 of the substantially right square bracket shape, which has the upper surface portion 32A and the inner and outer side surface portions 32B, 32C on its front side. Thus, as an effect achieved in this embodiment, the pillion step holder 21 and the latch arm 31 can be simply attached by inserting and arranging the fastening portion 23 of the pillion step holder 21 in the arm side fastening portion 32 and then attaching the fastening portion 23 and the arm side fastening portion 32 to the attachment plate 27 by fastening the bolts. Meanwhile, the pillion step 22 alone can be attached to the vehicle body by removing the arm side fastening portion 32 from the fastening portion 23 and fixing only the fastening portion 23 to the attachment plate 27 by fastening the bolts.

Note that, the present invention is not limited to this embodiment, and a variety of modifications are possible within the scope of the present invention. Various structures can be used as the bag supporting portion, for example, as long as the structures are each configured to substantially support the load of the saddlebag. In addition, a bolt may be used as the screw member. Furthermore, as the screw member, a screw having a slotted head or a Phillips head for a screwdriver to fit therein may be used.

## Claims

1. A saddlebag attachment structure for a saddle riding type vehicle, comprising:
a vehicle body;
a bag supporting portion (4) provided at a vehicle body rear portion (3);
an occupant step (22) attached to a side surface of the vehicle body rear portion (3) with attachment means (28, 28A);
a saddlebag (11) having saddlebag side latch means (16, 18) to be latched into the bag supporting portion (4); and
a latch member (31) whose front side (32) is attached to the vehicle body rear portion (3), whose rear side (33A) can be engaged with the saddlebag (11) and which is a unit separate from the occupant step (22), wherein
the latch member (31) is attached to a vehicle body attachment portion (27) where the occupant step (22) is to be attached, by using the attachment means (28, 28A) to which the occupant step (22) is attached, and
the latch member (31) is provided to extend from the vehicle body attachment portion (3) to the rear side;
**characterized in that** the attachment means (28, 28A) includes screw members (28, 28A);
the occupant step (22) and the latch member (31) respectively include a step side insertion hole (23S) and a latch member side insertion hole (32S) through both of which a screw member (28, 28A) is inserted, and
the occupant step (22) and the latch member (31) are attached to the vehicle body attachment portion (27) by inserting the screw member (28, 28A) through the step side insertion hole (23S) and the latch member side insertion hole (32S); and
the latch member (31) includes a latch member side attachment portion (32) attached to the vehicle body attachment portion (27),
the occupant step (22) includes a step side attachment portion (23) attached to the vehicle body attachment portion (27),
the latch member side attachment portion (32) has an upper surface portion (32A) and inner and outer side surface portions (32B, 32C), and
the latch member side attachment portion (32) is fitted onto outer sides of the step side attachment portion (23); and
the screw member (28A) is inserted through a latch member side insertion hole (32S) in the outer side surface portion (32C), the step side insertion hole (23S) of the step side attachment portion (23) of the occupant step (22), and a latch member side insertion hole (32S) in the inner side surface portion (32B) and is then screwed into a nut (29).

2. The saddlebag attachment structure for a saddle riding type vehicle according to claim 1, wherein
the attachment means (28, 28A) is provided in front and rear positions of the vehicle body attachment portion (27), and
the latch member (31) is provided to extend substantially along a virtual line connecting the front and rear positions of the attachment means (28, 28A).

3. A saddle riding type vehicle equipped with a saddlebag attachment structure as claimed in any preceding claim.

## Patentansprüche

1. Satteltaschenbefestigung für ein Fahrzeug mit Sattel, aufweisend:
ein Fahrzeugrahmen;
einen Taschenstützabschnitt (4), der an einem Fahrzeugrahmen-Hinterabschnitt (3) vorgesehen ist;
eine Insassentrittstufe (22), die mit Befestigungsmitteln (28, 28A) an einer Seitenfläche des Fahrzeugrahmen-Hinterabschnitts (3) befestigt ist;
eine Satteltasche (11) mit Satteltaschen-seitigen Verriegelungsmitteln (16, 18), die in den Taschenstützabschnitt (4) einzuklinken sind; und
ein Verriegelungselement (31), dessen Vorderseite (32) an dem Fahrzeugrahmen-Hinterabschnitt (3) befestigt ist, dessen Rückseite (33A) mit der Satteltasche (11) in Eingriff bringbar ist und das eine von der Insassentrittstufe (22) separate Einheit ist, wobei
das Verriegelungselement (31) an einem Fahrzeugrahmen-Befestigungsabschnitt (27) befestigt ist, an dem die Insassentrittstufe (22) zu befestigen ist, unter Verwendung der Befestigungsmittel (28, 28A), an denen die Insassentrittstufe (22) befestigt ist, und
das Verriegelungselement (31) vorgesehen ist, sich von dem Fahrzeugrahmen-Befestigungsabschnitt (3) zu der Rückseite zu erstrecken;
**dadurch gekennzeichnet, dass** die Befestigungsmittel (28, 28A) Schraubenelemente (28, 28A) aufweisen;
die Insassentrittstufe (22) und das Verriegelungselement (31) ein Trittstufenseitiges Einführungsloch (23S) beziehungsweise ein Verriegelungselement-seitiges Einführungsloch (32S) aufweisen, durch beide von denen ein Schraubenelement (28, 28A) eingeführt ist, und
die Insassentrittstufe (22) und das Verriegelungselement (31) an dem Fahrzeugrahmen-Befestigungsabschnitt (27) befestigt sind, indem das Schraubenelement (28, 28A) durch das Trittstufen-seitige Einführungsloch (23S) und Verriegelungselement-seitige Einführungsloch (32S) eingeführt ist; und
das Verriegelungselement (31) einen Verriegelungselement-seitigen Befestigungsabschnitt (32) aufweist, der an dem Fahrzeugrahmen-Befestigungsabschnitt (27) befestigt ist,
die Insassentrittstufe (22) einen Trittstufen-seitigen Befestigungsabschnitt (23) aufweist, der an dem Fahrzeugrahmen-Befestigungsabschnitt (27) befestigt ist,
der Verriegelungselement-seitige Befestigungsabschnitt (32) einen oberen Flächenabschnitt (32A) und einen inneren und äußeren Seitenflächenabschnitt (32B, 32C) aufweist, und
der Verriegelungselement-seitige Befestigungsabschnitt (32) auf die Außenseiten des Trittstufen-seitigen Befestigungsabschnitts (23) aufgesetzt ist; und
das Schraubelement (28A) durch ein Verriegelungselement-seitiges Einführungsloch (32S) in dem äußeren Seitenflächenabschnitt (32C), das Trittstufen-seitige Einführungsloch (23S) des Trittstufen-seitigen Befestigungsabschnitts (23) der Insassentrittstufe (22), und ein Verriegelungselement-seitiges Einführungsloch (32S) in dem inneren Seitenflächenabschnitt (32B) eingeführt ist und dann in eine Mutter (29) eingeschraubt ist.

2. Satteltaschenbefestigung für ein Fahrzeug mit Sattel nach Anspruch 1, wobei
die Befestigungsmittel (28, 28A) an einer vorderen und hinteren Position des Fahrzeugrahmen-Befestigungsabschnitts (27) vorgesehen sind, und
das Verriegelungselement (31) vorgesehen ist, sich im Wesentlichen entlang einer virtuellen Linie zu erstrecken, die die vordere und hintere Position der Befestigungsmittel (28, 28A) verbindet.

3. Fahrzeug mit Sattel, das mit einer Satteltaschenbefestigung nach einem der vorhergehenden Ansprüche ausgestattet ist.

## Revendications

1. Structure de fixation de sacoche de selle pour un véhicule du type à enfourchement, comprenant :
un corps de véhicule ;
une partie de support de sacoche (4) fournie sur une partie arrière (3) du corps de véhicule ;
une marche d'occupant (22) fixée à une surface latérale de la partie arrière (3) du corps de véhicule avec des moyens de fixation (28, 28A) ;
une sacoche de selle (11) ayant des moyens de verrouillage latéraux de sacoche de selle (16, 18) à verrouiller dans la partie de support de sacoche (4) ; et
un élément de verrouillage (31) dont le côté avant (32) est fixé à la partie arrière (3) du corps de véhicule, dont le côté arrière (33A) peut être engagé sur la sacoche de selle (11) et qui est une unité séparée de la marche d'occupant (22), dans laquelle :
l'élément de verrouillage (31) est fixé à une partie de fixation (27) du corps de véhicule où la marche d'occupant (22) doit être fixée en utilisant les moyens de fixation (28, 28A) auxquels la marche d'occupant (22) est fixée et
l'élément de verrouillage (31) est prévu pour s'étendre de la partie de fixation (3) du corps de véhicule au côté arrière ;
**caractérisé en ce que** les moyens de fixation (28, 28A) comprennent des éléments de vissage (28, 28A) ;
la marche d'occupant (22) et l'élément de verrouillage (31) comprennent respectivement un trou d'insertion latéral de marche (23S) et un trou d'insertion latéral d'élément de verrouillage (32S) à travers lesquels un élément de vissage (28, 28A) est inséré et
la marche d'occupant (22) et l'élément de verrouillage (31) sont fixés à la partie de fixation (27) du corps de véhicule en insérant l'élément de vissage (28, 28A) à travers le trou d'insertion latéral de marche (23S) et le trou d'insertion latéral d'élément de verrouillage (32S) ; et
l'élément de verrouillage (31) comprend une partie de fixation latérale d'élément de verrouillage (32) fixée à la partie de fixation (27) du corps de véhicule,
la marche d'occupant (22) comprend une partie de fixation latérale de marche (23) fixée à la partie de fixation (27) du corps de véhicule,
la partie de fixation latérale d'élément de verrouillage (32) a une partie de surface supérieure (32A) et des parties de surface latérales interne et externe (32B, 32C) et
la partie de fixation latérale d'élément de verrouillage (32) est ajustée sur les côtés externes de la partie de fixation latérale de marche (23) ; et
l'élément de vissage (28A) est inséré à travers un trou d'insertion latéral d'élément de verrouillage (32S) dans la partie de surface latérale externe (32C), le trou d'insertion latéral de marche (23S) de la partie de fixation latérale de marche (23) de la marche d'occupant (22) et un trou d'insertion latéral d'élément de verrouillage (32S) dans la partie de surface latérale interne (32B) et est ensuite vissé dans un écrou (29).

2. Structure de fixation de sacoche de selle pour un véhicule du type à enfourchement selon la revendication (1), dans laquelle :
les moyens de fixation (28, 28A) sont disposés dans les positions avant et arrière de la partie de fixation (27) du corps de véhicule et
l'élément de verrouillage (31) est disposé pour s'étendre sensiblement le long d'une ligne virtuelle raccordant les positions avant et arrière des moyens de fixation (28, 28A).

3. Véhicule du type à enfourchement équipé d'une structure de fixation de sacoche de selle selon l'une quelconque des revendications précédentes.
